# EUROPEAN PATENT APPLICATION

(11) **EP 0 877 439 A2**
(43) Date of publication of application: **11.11.1998**
(21) Application number: 98303317.6
(22) Date of filing: 28.04.1998
(51) Int. Cl.: H01Q 1/12, H01Q 1/32

(54) **GPS wave receiving film antenna apparatus**

(30) Priority: 08.05.1997 JP 118222/97
(71) Applicant: HARADA INDUSTRY CO., LTD., Shinagawa-ku Tokyo (JP)
(72) Inventor: Imamura, Yutaka, Yokohama-shi, Kanagawa-ken (JP)
(74) Representative: Crawford, Andrew Birkby

(57) **Abstract**

A GPS wave receiving film antenna apparatus of the present invention includes an antenna element holding sheet (15) constituted of a resin film, a circularly polarized antenna element (14) for receiving a GPS wave, which is constituted of a long conductive line adhered to the antenna element holding sheet (15), a low noise amplifier (25) one end of which is connected to a feed section (14a) of the circularly polarized antenna element (14) and the other end of which is connected to a feeder (24), and a holding case (20) for holding the low noise amplifier (25), which has a supporting portion for supporting one end of the antenna element holding sheet (15) and mounting portions (A to D) fixed to a mounting object in a predetermined position.

## Description

The present invention relates to a GPS wave receiving film antenna apparatus mounted on the rear window of an automobile and the like.

FIG. 6 is a view of an example of a prior art GPS wave receiving antenna apparatus capable of receiving a GPS wave. As illustrated in FIG. 6, a prior art GPS wave receiving antenna apparatus 30 includes a printed circuit board 31 having an LNA (Low Noise Amplifier) constituted of a transistor on its outer surface, a dielectric block 32 constituted of ceramics bonded to the inner surface of the board 31, an electrode plate 33 adhered onto the upper surface of the block 32 and serving as an antenna element, a feed pin 34 provided in the central part of the electrode plate 33, and a feeder 35 connected to the feed pin 34.

Actually, the GPS wave receiving antenna apparatus is used as being contained in a resin-made protection case (not shown).

The prior art GPS wave receiving antenna apparatus 30 has the following drawback. Since a patch antenna, which includes the dielectric block 32, electrode plate 33 and feed pin 34, is increased in thickness and held in the protection case, the antenna apparatus 30 is considerably thick. It is thus impossible to mount this antenna apparatus 30 on the window of an automobile.

Moreover, the patch antenna is greatly protruded from the mounting face of the window. Wherever the antenna apparatus is mounted on the car body, the protruded portion of the patch antenna makes the outer appearance of the car body unsightly and puts obstacles in the way of car washing.

In view of antenna properties, the patch antenna has to be mounted on that portion where there is no obstacles blocking a wave over the antenna. Thus, there are restrictions on the antenna mounting portion.

An object of the present invention is to provide a GPS wave receiving film antenna apparatus which is capable of receiving a GPS wave satisfactorily and which is so thin that it can be mounted on the window of an automobile without any trouble and also done stably and exactly according to the conditions of a mounting portion of the window.

To achieve the above object, the GPS wave receiving film antenna apparatus according to the present invention has the following constructions. The other characteristic constructions will be described later in the embodiments of the present invention.
(1) A GPS wave receiving film antenna apparatus comprises an antenna element holding sheet constituted of a resin film; a circularly polarized antenna element for receiving a GPS wave, the circularly polarized antenna element having a feed section and constituted of a long conductive line adhered to the antenna element holding sheet; a low noise amplifier one end of which is connected to the feed section of the circularly polarized antenna element; a feeder connected to other end of the low noise amplifier; and a holding case for holding the low noise amplifier, the holding case having a supporting portion for supporting one end of the antenna element holding sheet and mounting portions fixed to a mounting object in a predetermined position.
(2) In the GPS wave receiving film antenna apparatus of above (1), the circularly polarized antenna element has compound lines each formed of a long conductive line and arranged in parallel and a rectangular loop including each of the compound lines as a shorter side thereof and formed of a long conductive line, and the circularly polarized antenna element emits a circularly polarized wave in a direction perpendicular to a plane including the rectangular loop.

The invention can be more fully understood from the following detailed description when taken in conjunction with the accompanying drawings, in which;
FIG. 1 is a perspective view illustrating the outer appearance of a GPS wave receiving film antenna apparatus according to a first embodiment of the present invention, which is mounted on an automobile;
FIG. 2 is a front view of the GPS wave receiving film antenna apparatus of FIG. 1 which is seen from inside the automobile;
FIG. 3 is a side view specifically showing the constitution of the GPS wave receiving film antenna apparatus according to the first embodiment of the present invention;
FIG. 4 is a front view specifically showing the constitution of the GPS wave receiving film antenna apparatus according to the first embodiment of the present invention;
FIG. 5 is a perspective view schematically showing the constitution of a GPS wave receiving film antenna apparatus according to a second embodiment of the present invention; and
FIG. 6 is a perspective view of an example of a prior art GPS wave receiving antenna apparatus capable of receiving a GPS wave.

### (First Embodiment)

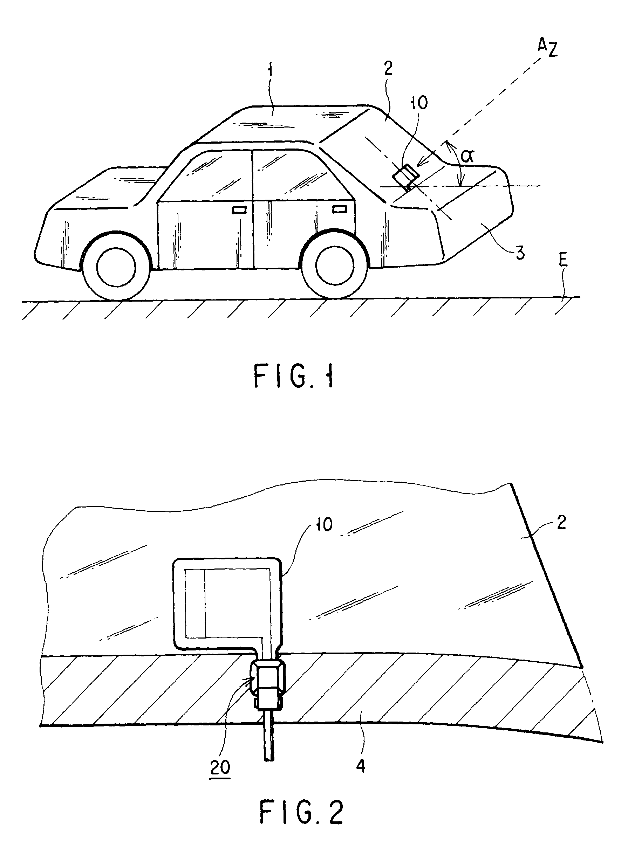

FIGS. 1 and 2 illustrate a GPS wave receiving film antenna apparatus according to a first embodiment of the present invention which is mounted on an automobile (an example of an on-vehicle window glass antenna apparatus). FIG. 1 is a perspective view of the outer appearance of the apparatus and FIG. 2 is a front view thereof seen from inside the automobile.

In FIG. 1, reference numeral 1 indicates an automobile on which the antenna apparatus is to be mounted, numeral 2 shows a rear window of the automobile, and numeral 3 denotes a trunk lid. An antenna section 10 of the GPS wave receiving antenna apparatus is mounted on the rear window 2.

The axis Ax perpendicular to the glass surface (antenna surface) of the rear window 2, is a reference direction of an incoming wave. An angle between the reference direction and the plane (ground surface) E, that is, an angle of elevation is expressed as α.

As shown in FIG. 2, the antenna apparatus includes a holding case 20 which is fixed to the lower end portion of the rear window 2, i.e., a (hatched) portion 4 covered with the lower frame of the window.

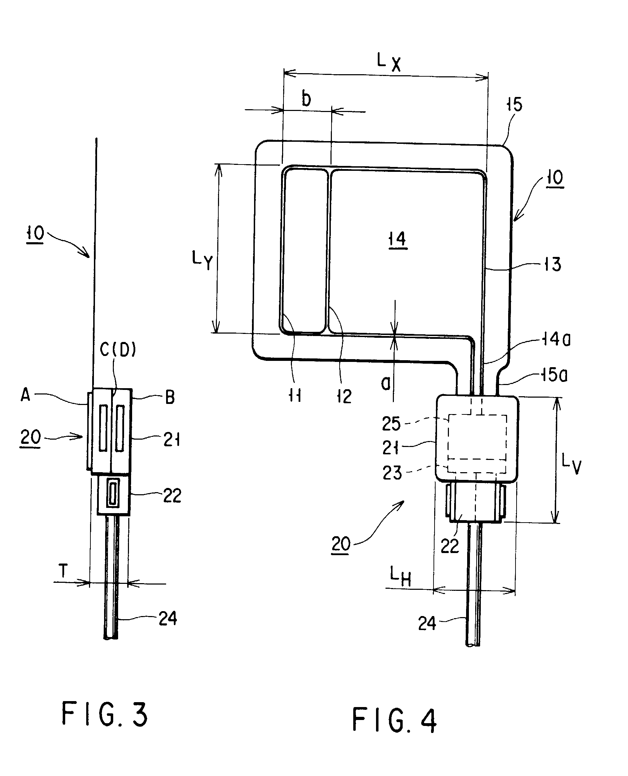

FIGS. 3 and 4 are side and front views specifically showing the constitution of the above GPS wave receiving film antenna apparatus.

Referring to FIGS. 3 and 4, the antenna section 10 is obtained by forming a circularly polarized antenna element 14 on a transparent resin-made antenna element holding sheet 15 using, e.g., a printing means.

The circularly polarized antenna element 14 is a right-handed circularly polarized antenna element formed by the use of a long conductive line (e.g., a copper-made strip conductive line). More specifically, the antenna element 14 includes compound lines 11 and 12 arranged in parallel and a rectangular loop 13 including each of the compound lines as a shorter side thereof. The antenna element is constituted so as to emit a circularly polarized wave in a direction perpendicular to the plane on which the rectangular loop 13 is formed. For example, the antenna element 14 has the following dimensions: width a of strip conductive line is about 0.5 mm, interval b of the compound lines is about 9.5 mm, length Lx of long side is about 40.5 mm, and length Ly of short side is about 33.5 mm.

The antenna element holding sheet 15 is obtained by a transmitting resin film (e.g., polyester film) having both moderate flexibility and moderate rigidity. This rigidity allows the whole sheet to be maintained in a predetermined position according to the supporting condition of a distal end portion 15a of the sheet 15.

As shown in FIGS. 3 and 4, the holding case 20 is flat and its both sides are parallel with the antenna section 10. The case 20 includes a case body 21 and a feeder connecting section 22, and the feeder connecting section 22 is detachably connected to the case body 21 through an insertion type connector 23. One end of a feeder 24 is connected in advance to the distal end portion of the feeder connecting section 22.

The tip end portion of the case body 21 is mechanically connected to the distal end portion 15a of the holding sheet 15. Thus, the case body 21 supports the holding sheet 15 in an arbitrary position. Mounting portions A to D, which can be fixed to the window frame by an adhesive means or the like, are formed on one side of the case body 21 to which the distal end portion 15a of the sheet 15 is bonded, the other side thereof, and both end faces thereof. The case body 21 can thus be mounted on a mounting object in a predetermined position.

The case body 21 contains an LNA (Low Noise Amplifier) 25. One end of the LNA 25 is electrically connected to a feed section 14a of the circularly polarized antenna element 14, and the other end is electrically connected to a conductive portion of the feeder 24 through the connector 23.

For example, the holding case 20 has the following dimensions: width LH of the case body 21 is about 16.5 mm, length LV of the holding case 20 is about 25 mm, and thickness T is about 7.5 mm.

### (Second Embodiment)

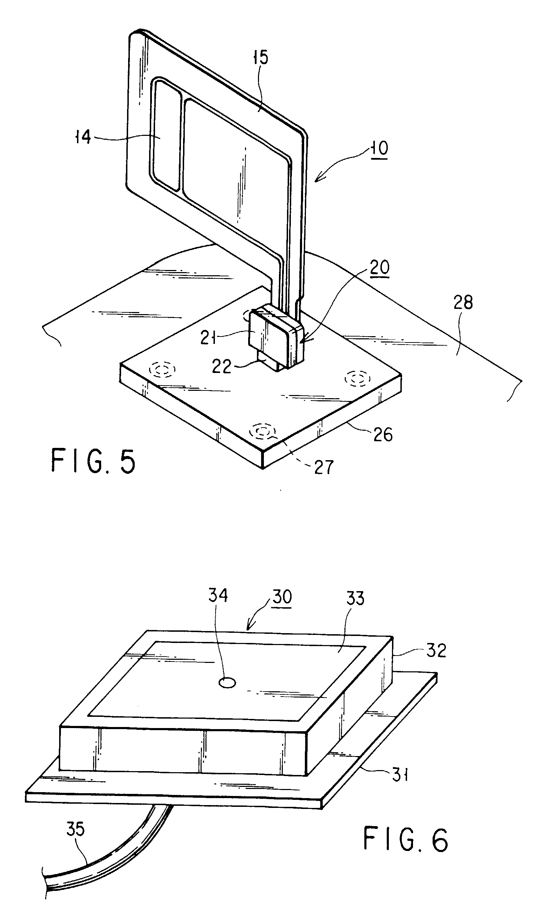

FIG. 5 is a perspective view schematically showing the constitution of a GPS wave receiving film antenna apparatus according to a second embodiment of the present invention. In this apparatus, as shown in FIG. 5, the lower end portion of the holding case 20 is adsorbed and fixed on a movable stand 26 through suckers 27, and the antenna section 10 can stably be placed in a predetermined position on the plane of the stand 26 in an upright position as if it were an "ornament."

### (Modification)

The GPS wave receiving film antenna apparatus according to each of the above embodiments can be modified as follows:
i) The circularly polarized antenna element 14 is a left-handed circularly polarized antenna element.
ii) The antenna element 14 is camouflaged by applying ornaments such as national flags to the surface of the antenna element holding sheet 15.

### (Merits of the Embodiments and Modifications)

The GPS wave receiving film antenna apparatus according to the above embodiments and its modifications have structures and advantages as described below.

[1] The GPS wave receiving film antenna apparatus comprises an antenna element holding sheet 15 constituted of a resin film; a circularly polarized antenna element 14 for receiving a GPS wave, which has a feed section 14a and is constituted of a long conductive line adhered to the antenna element holding sheet 15; a low noise amplifier 25 one end of which is connected to the feed section 14a of the circularly polarized antenna element 14; a feeder 24 connected to the other end of the low noise amplifier 25; and a holding case 20 for holding the low noise amplifier 25, which has a supporting portion for supporting one end of the antenna element holding sheet 15 and mounting portions A to D fixed to a mounting object in a predetermined position.

In the GPS wave receiving film antenna apparatus described above, since the low noise amplifier 25 is connected to the vicinity (feed section) of the antenna element 14, the performance of the antenna is secured sufficiently.

Since the antenna section 10, which is constituted of the antenna element holding sheet 15 and circularly polarized antenna element 14, has no great projection and is thin, it is favorable to a glass antenna used as one mounted to a windowpane.

Even when it is difficult to mount the antenna section 10 on the window of a car, it can be mounted on the window frame or the other portions of the car in a predetermined position if the mounting portions A to D of the holding case 20 are selectively used.

[2] In the GPS wave receiving film antenna apparatus of above [1], the resin film is a transparent resin film.

In this antenna apparatus, not only the antenna element holding sheet 15 but also the antenna section 10 has transparency. Therefore, even when the apparatus is mounted on the rear window 2, it does not obscure one's view; accordingly, the function proper to the windowpane will not be lost.

[3] In the GPS wave receiving film antenna apparatus of above [1] or [2], the circularly polarized antenna element 14 has compound lines 11 and 12 each formed of a long conductive line and arranged in parallel and a rectangular loop 13 including each of the compound lines as a shorter side thereof and formed of a long conductive line. The antenna element is constituted so as to emit a circularly polarized wave in a direction perpendicular to the plane including the rectangular loop 13.

In the foregoing antenna apparatus, the antenna section 10, which has an antenna pattern capable of receiving a GPS wave satisfactorily, can be manufactured easily and exactly.

[4] In the GPS wave receiving film antenna apparatus of above [3], the holding case 20 is flat and a side thereof is parallel with the antenna element holding sheet 15.

In the above antenna apparatus, since the antenna element holding sheet 15 can be mounted on the windowpane and the flat holding case 20 can be fixed to the window frame cooperatively, the antenna mounting operation can be performed simply and exactly.

[5] In the GPS wave receiving film antenna apparatus of above [4], the holding case 20 includes a case body 21 and a feeder connecting section 22 detachably connected to the case body 21 through a connector 23.

In the antenna apparatus described above, a process from manufacturing to mounting can be executed with the case body 21 and feeder connecting section 22 separated from each other. To mount the antenna apparatus, an integrated component of the antenna section 10 and case body 21 is mounted on a mounting object and then the feeder connecting section 22, which is connected in advance to the feeder 24, is coupled to the case body 21 integrally with each other, with the result that the mounting operation can be simplifier further. Moreover, the case body 21 and feeder connecting section 22 can be separated from each other, and the antenna section 10 and low noise amplifier 25 are united, with the result that only the united part can properly be replaced with a new one, which is favorable to maintenance. Furthermore, the right-handed and left-handed circularly polarized antenna elements can be used selectively.

[6] In the GPS wave receiving film antenna apparatus of above [1], a lower end portion of the holding case 20 is fixed on a movable stand 26.

In this apparatus, the antenna section 10 can stably be placed in a predetermined position on the plane 28 in an upright position as if it were an "ornament."

## Claims

1. A GPS wave receiving film antenna apparatus characterized by comprising:
an antenna element holding sheet (15) constituted of a resin film;
a circularly polarized antenna element (14) for receiving a GPS wave, the circularly polarized antenna element (14) having a feed section (14a) and constituted of a long conductive line adhered to the antenna element holding sheet (15);
a low noise amplifier (25) one end of which is connected to the feed section (14a) of the circularly polarized antenna element (14);
a feeder (24) connected to other end of the low noise amplifier (25); and
a holding case (20) for holding the low noise amplifier (25), the holding case (20) having a supporting portion for supporting one end of the antenna element holding sheet (15) and mounting portions (A to D) fixed to a mounting object in a predetermined position.

2. The GPS wave receiving film antenna apparatus according to claim 1, characterized in that the resin film is a transparent resin film.

3. The GPS wave receiving film antenna apparatus according to claim 1, characterized in that the circularly polarized antenna element (14) has compound lines (11, 12) each formed of a long conductive line and arranged in parallel and a rectangular loop (13) including each of the compound lines (11, 12) as a shorter side thereof and formed of a long conductive line, and the circularly polarized antenna element (14) emits a circularly polarized wave in a direction perpendicular to a plane including the rectangular loop (13).

4. The GPS wave receiving film antenna apparatus according to claim 2, characterized in that the circularly polarized antenna element (14) has compound lines (11, 12) each formed of a long conductive line and arranged in parallel and a rectangular loop (13) including each of the compound lines (11, 12) as a shorter side thereof and formed of a long conductive line, and the circularly polarized antenna element (14) emits a circularly polarized wave in a direction perpendicular to a plane including the rectangular loop (13).

5. The GPS wave receiving film antenna apparatus according to claim 3, characterized in that the holding case (20) is flat, and a side thereof is parallel with the antenna element holding sheet (15).

6. The GPS wave receiving film antenna apparatus according to claim 4, characterized in that the holding case (20) is flat, and a side thereof is parallel with the antenna element holding sheet (15).

7. The GPS wave receiving film antenna apparatus according to claim 5, characterized in that the holding case (20) includes a case body (21) and a feeder connecting section (22) detachably connected to the case body (21) through a connector.

8. The GPS wave receiving film antenna apparatus according to claim 6, characterized in that the holding case (20) includes a case body (21) and a feeder connecting section (22) detachably connected to the case body through a connector.

9. The GPS wave receiving film antenna apparatus according to claim 1, characterized in that a lower end portion of the holding case (20) is fixed on a movable stand (26).
